# EUROPÄISCHE PATENTSCHRIFT

(11) **EP 2 165 924 B1**
(45) Veröffentlichungstag und Bekanntmachung des Hinweises auf die Patenterteilung: **02.10.2013**
(21) Anmeldenummer: 09010712.9
(22) Anmeldetag: 20.08.2009
(51) Int. Cl.: B62K 23/06, B62M 25/04

(54) **Schalter für ein Fahrradgetriebe**
Switch for a bicycle gear
Commutateur pour un engrenage de vélo

(30) Priorität: 20.09.2008 DE 102008048134
(43) Veröffentlichungstag der Anmeldung: 24.03.2010
(73) Patentinhaber: SRAM Deutschland GmbH, 97424 Schweinfurt (DE)
(72) Erfinder: Weiss, Martin, 97424 Schweinfurt (DE)
(74) Vertreter: Prechtel, Jörg

(56) Entgegenhaltungen:
- EP-A1- 0 485 955
- EP-A2- 1 837 275
- EP-A2- 1 972 536
- DE-U1- 9 115 661

## Beschreibung

Schalter zur Betätigung eines Getriebes an einem Fahrrad, umfassend ein Schaltergehäuse mit einem Mechanismus mit einer Seilspule zum Aufwickeln eines Zugseiles zur Betätigung einzelner Gangstufen des Getriebes, einen Spannhebel und einen Freigabehebel, wobei der Spannhebel drehbar um eine Hauptachse gegenüber dem Schaltergehäuse gelagert ist und zur Schaltung einzelner Gangstufen im Getriebe die Seilspule in einer Seilaufwickeldrehrichtung verdreht, während sich die Seilspule durch die Betätigung des Freigabehebels in einer Seilfreigabedrehrichtung um mindestens eine Gangstufe weiter dreht und diese schaltet.

Ein Schalter der oben beschriebenen Art ist aus der DE 10 2004 051 883 A1 bekannt geworden, der als Triggerschalter ein mit dem Fahrradgetriebe verbundenes Zugseil auf eine in seinem Schaltergehäuse drehbeweglich angeordnete Seilspule aufwickeln und so das Zugseil spannen kann, wodurch durch die Betätigung des Spannhebels in der Aufwickeldrehrichtung jede vom Fahrer gewünschte Gangstufe im Fahrradgetriebe eingestellt werden kann. Das Zurückschalten in der Seilfreigabedrehrichtung soll durch die Betätigung des Freigabehebels Gangstufe für Gangstufe, also getriggert erfolgen, was bedeutet, dass eine Betätigung des Freigabehebels das Zugseil für eine einzige Gangstufe freigibt. Mit dem Spannhebel ist eine angefederte Aufziehklinke drehfest verbunden, die mit einer Transportverzahnung in einer Steuerscheibe zusammen wirkt und diese in der Seilaufwickeldrehrichtung mitnimmt, falls erforderlich über den gesamten Gangstufenbereich. Um in der Seilfreigabedrehrichtung die nächste Gangstufe zu erreichen, muss die Aufziehklinke über eine Feder ausgehoben werden, bevor ein Schiebeelement durch seinen Eingriff in eine Sperrverzahnung einen Zahn und mithin eine Gangstufe frei gibt. Es werden für die einwandfreie Funktion des Schalters hohe Toleranzanforderungen an die Feder gestellt, was die Kosten in der Produktion und in der Inspektion steigen lässt. Außerdem entstehen durch die Verwendung einer einzigen Aufziehklinke innere Kräfte im Schalter, die mit Verschleiß und Funktionsausfällen einhergehen.

In der EP 0 485 955 ist ein Schalter gemäß dem Oberbegriff von Anspruch 1 gezeigt. In diesem Schalter steuern mehrere Klinken die Drehbewegung einer Seilwickelspule. In der Seitfrelgaberichtung greifen zwei Klinken wechselseitig in eine entsprechende Rastverzahnung ein und geben die Seilspule schrittweise in der Seilfreigaberichtung frei.

Die EP 1 972 536 offenbart einen Schalter, in dem zwei paarweise angeordnete Klinken an der Bewegung der Seilspule in der Seilspanndrehrichtung beteiligt sind und mit einem Spannhebel einerseits und der Sellwickelspule andererseits funktionell verbunden sind.

Der Schalter gemäß der vorliegenden Erfindung vermeidet die Entstehung von inneren Kräften durch die symmetrische Anordnung von Aufziehklinken, die in einer Nabe des Spannhebels angeordnet sind und sich gemeinsam mit diesem um die Hauptachse bewegen, um diese Drehbewegung auf die Seilspule zu übertragen. Im vorliegenden Fall werden zwei Aufziehklinken in der Nabe diametral gegenüber liegend angeordnet, um in zwei diametral gegenüber liegende Transportverzahnungen in der Steuerscheibe einzugreifen, die mit der Seilspule drehfest verbunden ist. Die Aufziehklinken sind in der Nabe angefedert und durchragen eine Schaltscheibe und die Grundplatte in sichelförmigen Durchbrüchen, um zum Eingriff in die Transportverzahnungen freie Drehbeweglichkeit beim Spannen des Zugseils zu haben.

Die vorerwähnte Schaltscheibe dient als Steuerelement für die schrittweise Freigabe des Zugseils durch den Freigabehebel, mit dem ein Schiebeelement verbunden ist. Dieses Schiebeelement steht ähnlich einem Anker bei der Uhr mit der Steuerscheibe in Wirkverbindung, wobei ein Haltezahn am Schiebeelement mit einer Halteverzahnung an der Steuerscheibe und ein Sperrzahn am Schiebeelement mit einer Sperrverzahnung an der Steuerscheibe zusammenwirken. In der Seilspanndrehrichtung werden der Haltezahn und der Sperrzahn von jeweils ihrer Verzahnung abgewiesen solange der Spannvorgang anhält. Wird dieser beendet, so kommt der Haltezahn in Eingriff und bleibt die Steuerscheibe und die Seilspule mit dem Zugseil in der geschalteten Gangstufe stehen. Der Spannhebel wird durch Federkraft in seine Ausgangsstellung zurückgestellt, wobei die Aufziehklinken in die Transportverzahnungen eingreifen. Hierbei sollen aber keine Kräfte wirken, vielmehr sollen die Aufziehklinken ohne Last mit geringem Spiel vor dem betreffenden Zahn der Transportverzahnung liegen, um das Aussteuern durch den Freigabehebel zu erleichtern.

Soll das Zugseil zur nächsten gewünschten Gangstufe weiter gespannt werden, so drehen die im Eingriff befindlichen Aufziehklinken beim Betätigen des Spannhebels die Steuerscheibe und damit die Seilspule über die Transportverzahnungen sofort zu einer beliebig gewünschten Schaltstufe weiter.

Wird beim schrittweise Schalten einzelner Gangstufen in der Freigabedrehrichtung der Freigabehebel betätigt, so müssen die Aufziehklinken aus den Transportverzahnungen ausgesteuert werden, bevor das Schiebeelement soweit verschoben ist, dass der Haltezahn aus der Halteverzahnung ausgehoben wird. Die Aufziehklinken werden von Rampen ausgehoben, die in sichelförmigen Durchbrüchen der Schaltscheibe angeformt sind, wobei diese Durchbrüche lediglich der freien Drehbeweglichkeit der Aufziehklinken dienen und sonst keine weitere Funktion haben. Die Rampen schieben sich beim Verdrehen der Schaltscheibe unter die Aufziehklinken und heben diese aus. Der Aushebevorgang findet immer in der Ausgangsstellung der Aufziehklinken statt, die zudem nicht unter Last stehen, weshalb wenige Winkelgrade der Schaltscheibe ausreichen, um den Aushebevorgang abzuschließen, bevor der Haltezahn aus dem Eingriff in die Halteverzahnung gelöst ist. Ein Sperrzahn am Schiebeelement greift anschließend nach der vom Zugseil verursachten Drehung der Steuerscheibe um wenige Winkelgrade in die Sperrverzahnung ein und hält die Steuerscheibe solange fest, bis das Schiebeelement beim Zurückkehren in seine Ausgangsstellung den Eingriff des Sperrzahnes in die Sperrverzahnung löst und der Haltezahn an dem Schiebeelement vom nächsten Zahn der Halteverzahnung eingefangen wird und die Seilspule fixiert.

Der Freigabehebel ist mit der Grundplatte über eine Haltelasche und ein zweites Drehgelenk verbunden und dreht sich um eine windschief zur Hauptachse verlaufende Drehachse, deren Lage eine ergonomische Betätigung durch den Fahrer erlaubt. Bei dieser Betätigung wird das mit dem Freigabehebel gelenkig verbundene Schiebeelement in einer Schieberichtung hin und her bewegt, wodurch der vorbeschriebene Eingriffswechsel des Haltezahnes und des Sperrzahnes in die jeweiligen Verzahnungen an der Steuerscheibe bewirkt wird. Die Betätigung des Freigabehebels bewirkt gleichzeitig eine Verdrehung der Schaltscheibe, die ein Koppelglied mit dem Freigabehebel verbindet. Dieses Koppelglied ist gelenkig mit dem Freigabehebel verbunden und müsste wegen der räumlichen Bewegung als tangentiale Befestigung an der Schaltscheibe ebenso ein Gelenk aufweisen. Aus Gründen der Rationalisierung aber hat man darauf verzichtet und das Koppelglied einteilig mit der Schaltscheibe verbunden, was eine räumliche Biegung des Koppelgliedes mit sich bringt. Im vorgeschlagenen Falle wird die Schaltscheibe aus dünnem Stahlblech hergestellt, das eine sichere Funktion des Koppelgliedes garantiert, zumal das Koppelglied nur auf Zug belastet wird. Bezogen auf die windschiefe Drehachse des Freigabehebels hat die gelenkige Verbindungsstelle einen Abstand, der gerade groß genug ist, um die Rampen der Schaltscheibe unter die Aufziehklinken zu schieben, bevor der Haltezahn des Schiebeelementes aus der Halteverzahnung herausgeschoben wird. Für die Bewegung des Koppelgliedes in der entgegen gesetzten Richtung sorgt eine Rückholfeder, die zwischen der Grundplatte und dem Koppelglied angeordnet ist.

Die Erfindung hat es sich zur Aufgabe gemacht, einen kostengünstigen Schalter zur Betätigung eines Getriebes an einem Fahrrad zu schaffen, der als Schrittschalter ausgeführt ist und beim Spannen des Zugseils hohen Schaltkräften gewachsen ist, ferner Verbesserungen hinsichtlich der Fertigungstoleranzen der an der Freigabe des Zugseils beteiligten Schaltelemente aufweist.

Die Lösung der Aufgabe ist in den kennzeichnenden Teilen des Hauptanspruches und des nebengeordneten Anspruchs beschrieben. Ausgestaltungen sind den jeweiligen Unteransprüchen zu entnehmen.

Anhand mehrerer Darstellungen einer aufgelösten perspektivischen Explosionszeichnung wird ein Schalter zur Betätigung eines Fahrradgetriebes erläutert. Es zeigen:
- Fig. 1: eine Seilspule ;
- Fig. 2: eine Steuerscheibe mit zwei diametral gegenüberliegenden Transportverzahnungen, einer Halteverzahnung und einer Sperrverzahnung;
- Fig. 3: eine Grundplatte, auf der ein Schiebeelement mit einem Haltezahn und einem Sperrzahn in einer Schieberichtung bewegbar ist;
- Fig. 4: eine Schaltscheibe mit einem Koppelglied, das mit einem Freigabehebel gelenkig verbunden ist;
- Fig. 5: einen Spannhebel mit einer Nabe, in der zwei Aufziehklinken angeordnet sind;
- Fig. 6: einen Ausschnitt aus der Steuerscheibe mit der Schaltscheibe und eine Aufziehklinke im Eingriff in die Transportverzahnung;
- Fig. 7: den Ausschnitt gemäß Fig. 6 mit den ausgehobenen Aufziehklinken.

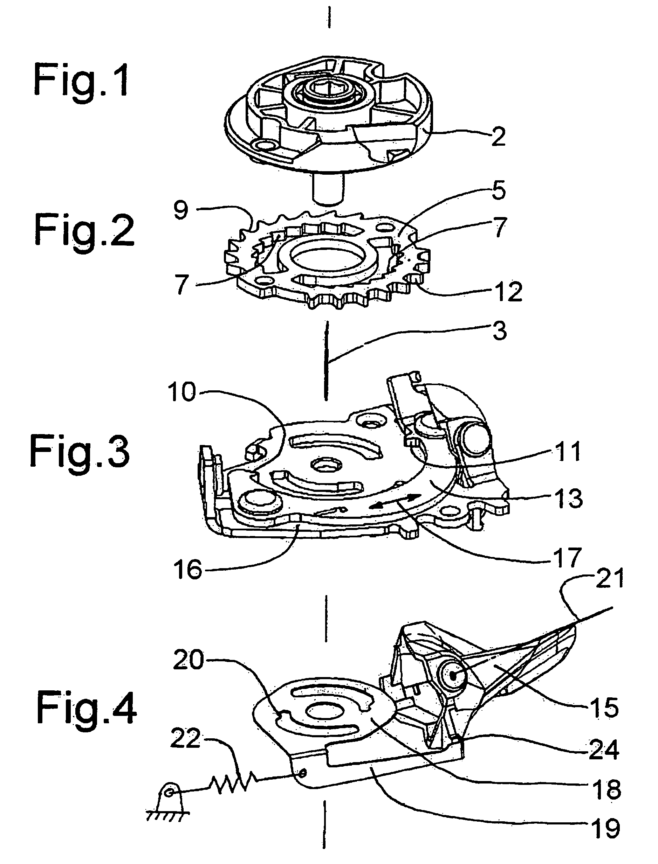

In den folgenden Ausführungen wird ein Schalter 1 beschrieben, der ein hier nicht dargestelltes Schaltergehäuse aufweist, in welches die in den Zeichnungen dargestellten Funktionselemente integriert sind. So geht aus der Fig. 1 eine Seilspule 2 hervor, die um eine Hauptachse 3 drehbar gelagert ist und einen Teil eines hier nicht dargestellten Zugseiles aufwickeln kann, welches mit einem Fahrradgetriebe verbunden ist. Das Zugseil spannt die Seilspule 2 in einer Seilfreigabedrehrichtung 4 mit einem bestimmten Drehmoment durch eine nicht dargestellte Feder im Getriebe vor.

Die Seilspule 2 ist drehfest mit einer Steuerscheibe 5 gemäß der Fig. 2 verbunden, wo zwei diametral gegenüberliegende Transportverzahnungen 7 angeordnet sind, in welche Aufziehklinken 6 eingreifen, um die Steuerscheibe 5 in einer Seilspanndrehrichtung 8 zu verdrehen. Die Steuerscheibe 5 weist ferner eine Halteverzahnung 9 auf, die mit einem Haltezahn 10 zusammenwirkt und eine Sperrverzahnung 12, in die ein Sperrzahn 11 eingreift, um die schrittweise Freigabe des Zugseils zu ermöglichen.

Aus der Fig. 3 geht ein Schiebeelement 13 hervor, das mit einem Freigabehebel 15 gelenkig verbunden ist und die Steuerscheibe 5 halbkreisförmig umgreift, wobei das Schiebeelement 13 derart auf einer Grundplatte 16 angeordnet ist, dass es durch die Betätigung des Freigabehebels 15 in einer Schieberichtung 17 hin und her bewegt werden kann. Der Haltezahn 10 ist an dem Schiebeelement 13 auf der dem Freigabehebel 15 abgewandten Seite so angeordnet, dass er in der Ausgangsstellung des Freigabehebels 15 in die Halteverzahnung 9 eingreift und die Seilspule 2 für die gewählte Gangstufe arretiert. Der dem Freigabehebel 15 zugewandte Sperrzahn 11 kommt nach dem Ausklinken des Haltezahnes 10 nach der Verschiebung des Schiebeelementes 13 in Eingriff mit der Sperrverzahnung 12 der Steuerscheibe 5, um diese anzuhalten, bis durch das Zurückkehren des Schiebeelementes 13 in seine Ausgangsstellung der Haltezahn 10 in den Eingriff mit der Halteverzahnung 9 der Schritt zur nächsten Gangstufe abgeschlossen ist.

Aus der Fig. 4 geht eine Schaltscheibe 18 hervor, an welcher tangential ein Koppelglied 19 angeordnet ist, welches mit dem Freigabehebel 15 über eine gelenkige Verbindungsstelle 24 in Wirkverbindung steht. Der Freigabehebel 15 ist drehbeweglich um eine Drehachse 21 auf der Grundplatte 16 gelagert und übt auf das Koppelglied 19 eine Zugbewegung aus, die die um die Hauptachse 3 gelagerte Schaltscheibe 18 verdreht, um die mit den Transportverzahnungen 7 in der Steuerscheibe 5 im Eingriff befindlichen Aufziehklinken 6 auszuheben. Dies geschieht mittels Rampen 20, die an der Schaltscheibe 18 angeformt sind und sich unter die Aufziehklinken 6 schieben, wenn der Freigabehebel 15 betätigt wird. Beim Loslassen des Freigabehebels 15 zieht eine Rückholfeder 22 die Schaltscheibe 18 in ihre Ausgangsstellung zurück.

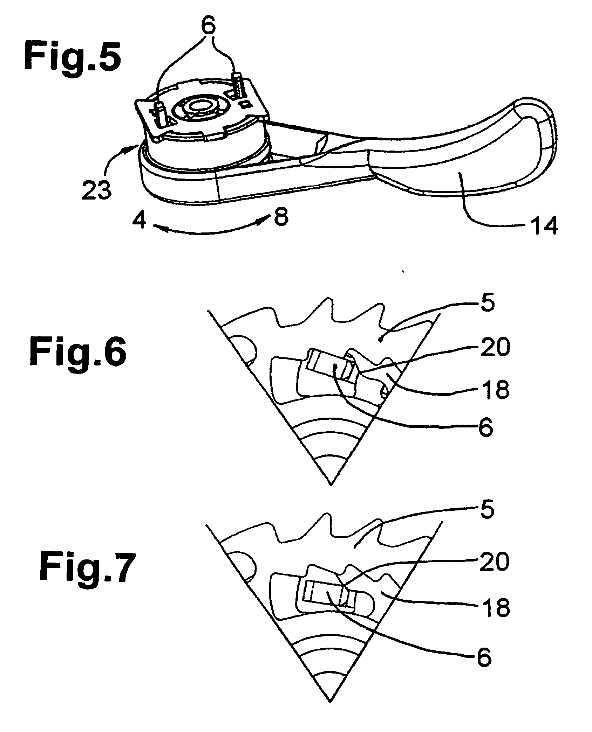

Die Fig. 5 zeigt einen Spannhebel 14, der zum Schalten von beliebigen Gangstufen in der Seilspanndrehrichtung 8 verdreht werden muss, um die in seiner Nabe 23 mit Federvorspannung angeordneten Aufziehklinken 6 um die Hauptachse 3 zu verdrehen und über die Transportverzahnung 7 in der Steuerscheibe 5 die Seilspule 2 in der Seilspanndrehrichtung 8 zu verdrehen. Das Zugseil wird eingeholt und die gewünschte Gangstufe eingestellt. Die uneingeschränkte Drehbeweglichkeit der Aufziehklinken 6 wird mit sichelförmigen Durchbrüchen in der Grundplatte 16 und in der Schaltscheibe 18 sichergestellt.

Mit der Fig. 6 soll in einer Projektion entlang der Hauptachse 3 dargestellt werden, wie sich die Aufziehklinke 6 im Eingriff mit der Transportverzahnung 7 in der Steuerscheibe 5 befindet. Es ist erkennbar, wie die Rampe 20 der Schaltscheibe 18 vor der Aufziehklinke 6 liegt. Zwischen der Zahnflanke und der Aufziehklinke 6 ist als Ausgangsstellung für jede Gangstufe ein geringes Spiel zu erkennen, wodurch beim Ausheben der Aufziehklinke 6 nur geringe Kräfte zur Überwindung der Federkraft erforderlich werden.

Aus der Fig. 7 geht hervor, dass sich die Schaltscheibe 18 mit der Rampe 20 entgegen dem Uhrzeigersinn weiter gedreht und die Aufziehklinke 6 ausgehoben hat. Die Steuerscheibe 5 kann sich nun in der Seilfreigabedrehrichtung 4 drehen und einen Schritt zur nächsten Gangstufe zulassen.

Der Vorteil der vorgeschlagenen technischen Ausführung des Schalters liegt in der Vereinfachung der Montage des Schalters, dessen Komponenten hinsichtlich ihrer Toleranzen vereinfacht wurden, wobei die Biegeteile mit häufigen Nacharbeiten und größerem Inspektionsaufwand entfallen sind.

## Patentansprüche

1. Schalter (1) zur Betätigung eines Getriebes an einem Fahrrad, umfassend ein Schaltergehäuse mit einem Mechanismus mit einer Seilspule (2) zum Aufwickeln eines Zugseiles zur Betätigung einzelner Gangstufen des Getriebes, einen Spannhebel (14) und einen Freigabehebel (15), wobei der Spannhebel (14) drehbar um eine Hauptachse (3) gegenüber dem Schaltergehäuse gelagert ist und sich der Spannhebel (14) zur Schaltung einzelner Gangstufen im Getriebe und sich die mit dem Spannhebel (14) unter Einbeziehung einer Aufziehklinke (6) gekoppelte Seilspule (2) in einer Seilspanndrehrichtung (8) verdrehen, während sich die Seilspule (2) durch die Betätigung des Freigabehebels (15) in einer Seilfreigabedrehrichtung (4) um mindestens eine Gangstufe weiter dreht und diese schaltet,
**dadurch gekennzeichnet,**
**dass** zur Freigabe der über den Spannhebel (14) jeweils gewählten Gangstufe insgesamt zwei Aufziehklinken (6) aus ihrem Eingriff mit einer Transportverzahnung (7) gebracht werden, wobei eine Schaltscheibe (18) angeordnet ist, mit Hilfe derer die Aufziehklinken (6) aus ihrem Eingriff in die Transportverzahnungen (7) ausgehoben werden,
wobei die Schaltscheibe (18) Rampen (20) aufweist, die sich bei einer Drehbewegung der Schaltscheibe (18) gegen die in der Ausgangsstellung befindlichen Aufziehklinken (6) schieben, um diese aus ihrem Eingriff mit den Transportverzahnungen (7) zu lösen,
wobei weiterhin ein Koppelglied (19) die Schaltscheibe (18) mit dem Freigabehebel (15) verbindet.

2. Schalter nach Anspruch 1,
**dadurch gekennzeichnet,**
**dass** die Schaltscheibe (18) sichelförmige Durchbrüche für die freie Drehbeweglichkeit der Aufziehklinken (6) aufweist, in denen die Rampen (20) zum Ausheben der Aufziehklinken (6) angeformt sind.

3. Schalter nach einem der Ansprüche 1 oder 2,
**dadurch gekennzeichnet,**
**dass** bei der Betätigung des Freigabehebels (15) die Schaltscheibe (18) über das Koppelglied (19) soweit verdreht werden kann, dass die Rampen (20) den Eingriff der Aufziehklinken (6) mit den Transportverzahnungen (7) lösen.

4. Schalter nach einem der Ansprüche 1 bis 3,
**dadurch gekennzeichnet,**
**dass** das Koppelglied (19) die Schaltscheibe (18) mit dem Freigabehebel (15) als Zugelement verbindet.

5. Schalter nach einem der Ansprüche 1 bis 4,
**dadurch gekennzeichnet,**
**dass** das Koppelglied (19) mit dem Freigabehebel (15) gelenkig verbunden ist.

6. Schalter nach einem der Ansprüche 1 bis 5,
**dadurch gekennzeichnet,**
**dass** die Schaltscheibe (18) aus dünnem Stahlblech besteht.

7. Schalter nach einem der Ansprüche 1 bis 6,
**dadurch gekennzeichnet,**
**dass** die Schaltscheibe (18) und das Koppelglied (19) einteilig miteinander verbunden sind.

8. Schalter nach einem der Ansprüche 1 bis 7,
**dadurch gekennzeichnet,**
**dass** der Freigabehebel (15) und die Schaltscheibe (18) durch eine Rückholfeder (22) am Koppelglied (19) in ihre Ausgangsstellung zurückgeführt werden.

## Claims

1. Switch (1) for actuating a gear on a bicycle, comprising a switch housing having a mechanism with a cable reel (2) for winding up a pull cable for actuating individual gear stages of the gear, a tensioning lever (14) and a release lever (15), wherein the tensioning lever (14) is mounted rotatably about a main axis (3) in relation to the switch housing, and the tensioning lever (14) rotates in order to switch individual gear stages in the gear, and the cable reel (2) which is coupled to the tensioning lever (13) with a wind-up pawl (6) being incorporated rotates in a cable-pull direction of rotation (8), while, by actuation of the release lever (15), the cable reel (2) rotates in a cable-release direction of rotation (4) about at least one gear stage and switches the latter, **characterized in that** in order to release the gear stages respectively selected via the tensioning lever (14), a total of two wind-up pawls (6) are brought out of the engagement thereof with a transport toothing (7), wherein, with the aid of a switching disc (18), the wind-up pawls (6) are lifted out of the engagement thereof in the transport toothings (7), wherein the switching disc (18) has ramps (20) which, upon a rotational movement of the switching disc (18), push against the wind-up pawls (6) which are in the starting position, in order to release said wind-up pawls from the engagement thereof with the transport toothings (7), wherein, furthermore, a coupling element (19) connects the switching disc (18) to the release lever (15).

2. Switch according to Claim 1, **characterized in that** the switching disc (18) has sickle-shaped apertures for the free rotatability of the wind-up pawls (6), in which apertures the ramps (20) for the lifting out of the wind-up pawls (6) are integrally formed.

3. Switch according to either of Claim 1 and 2, **characterized in that** that when the release lever (15) is actuated, the switching disc (18) can be rotated via the coupling element (19) until the ramps (20) release the engagement of the wind-up pawls (6) with the transport toothings (7).

4. Switch according to one of Claims 1 to 3, **characterized in that** the coupling element (19) connects the switching disc (18) to the release lever (15) in the form of a tension element.

5. Switch according to one of Claims 1 to 4, **characterized in that** the coupling element (19) is connected in an articulated manner to the release lever (15).

6. Switch according to one of Claims 1 to 5, **characterized in that** the switching disc (18) is composed of thin steel sheet.

7. Switch according to one of Claims 1 to 6 **characterized in that** the switching disc (18) and the coupling element (19) are connected to each other as single part.

8. Switch according to one of Claims 1 to 7, **characterized in that** the release lever (15) and the switching disc (18) are returned into the starting position thereof by a return spring (22) on the coupling element (19).

## Revendications

1. Commutateur (1) pour l'actionnement d'une transmission de bicyclette, comprenant un boîtier de commutateur avec un mécanisme comprenant une bobine à câble (2) pour enrouler un câble de traction pour l'actionnement de rapports de vitesses individuels de la transmission, un levier de tensionnement (14) et un levier de libération (15), le levier de tensionnement (14) étant monté de manière à pouvoir tourner autour d'un axe principal (3) par rapport au boîtier de commutateur et le levier de tensionnement (14), pour commuter des rapports de vitesses individuels dans la transmission, et la bobine à câble (2) accouplée au levier de tensionnement (14), par l'intermédiaire d'un cliquet tendeur (6), tournant dans un sens de rotation de tensionnement du câble (8), tandis que la bobine à câble (2) continue de tourner sous l'actionnement du levier de libération (15) dans un sens de rotation de libération du câble (4) suivant au moins un rapport de vitesse, et commutant celui-ci,
**caractérisé en ce que**
pour la libération du rapport de vitesse respectivement sélectionné par le biais du levier de tensionnement (14), au total deux cliquets tendeurs (6) sont amenés hors de leur engagement avec une denture de transport (7), un disque de commutation (18) étant prévu, à l'aide duquel les cliquets tendeurs (6) sont soulevés hors de leur engagement dans les dentures de transport (7),
le disque de commutation (18) présentant des rampes (20) qui se déplacent, dans le cas d'un mouvement de rotation du disque de commutation (18), contre les cliquets tendeurs (6) situés dans la position de départ, afin de les libérer de leur engagement avec les dentures de transport (7),
et en outre un organe d'accouplement (19) reliant le disque de commutation (18) au levier de libération (15).

2. Commutateur selon la revendication 1,
**caractérisé en ce que**
le disque de commutation (18) présente des orifices en forme de croissant pour la libre mobilité en rotation des cliquets tendeurs (6), dans lesquels les rampes (20) sont façonnées pour soulever les cliquets tendeurs (6).

3. Commutateur selon l'une quelconque des revendications 1 ou 2,
**caractérisé en ce que**
lors de l'actionnement du levier de libération (15), le disque de commutation (18) peut tourner par le biais de l'organe d'accouplement (19) dans une mesure telle que les rampes (20) libèrent l'engagement des cliquets tendeurs (6) avec les dentures de transport (7).

4. Commutateur selon l'une quelconque des revendications 1 à 3,
**caractérisé en ce que**
l'organe d'accouplement (19) relie le disque de commutation (18) au levier de libération (15) en tant qu'élément de traction.

5. Commutateur selon l'une quelconque des revendications 1 à 4,
**caractérisé en ce que**
l'organe d'accouplement (19) est connecté de manière articulée au levier de libération (15).

6. Commutateur selon l'une quelconque des revendications 1 à 5,
**caractérisé en ce que**
le disque de commutation (18) se compose de tôle d'acier mince.

7. Commutateur selon l'une quelconque des revendications 1 à 6,
**caractérisé en ce que**
le disque de commutation (18) et l'organe d'accouplement (19) sont reliés l'un à l'autre d'une seule pièce.

8. Commutateur selon l'une quelconque des revendications 1 à 7,
**caractérisé en ce que**
le levier de libération (15) et le disque de commutation (18) sont ramenés dans leur position de départ par un ressort de rappel (22) sur l'organe d'accouplement (19).
